**Europäisches Patentamt**

**European Patent Office**

**Office européen des brevets**

(11) Veröffentlichungsnummer: **0 111 117**
**A1**

(12) ## EUROPÄISCHE PATENTANMELDUNG

(21) Anmeldenummer: 83110515.0

(22) Anmeldetag: 21.10.83

(51) Int. Cl.³: **B 23 B 51/00**
**B 28 D 1/14**

(30) Priorität: 05.11.82 DE 3240859

(43) Veröffentlichungstag der Anmeldung:
20.06.84 Patentblatt 84/25

(84) Benannte Vertragsstaaten:
AT BE CH DE FR GB IT LI LU NL SE

(71) Anmelder: GEBRÜDER HELLER DINKLAGE GMBH
WERKZEUGFABRIK
Steinfelder Strasse 11
D-2843 Dinklage(DE)

(72) Erfinder: Kleine, Werner, Dipl.-Ing. Dipl.-Wirtsch.-Ing.
An der Marsch 29
D-2807 Achim-Uesen(DE)

(74) Vertreter: Patentanwälte Phys. Bartels, Dipl.-Ing. Fink
Dipl.-Ing. Held
Lange Strasse 51
D-7000 Stuttgart 1(DE)

(54) **Bohrwerkzeug zum Herstellen einer Erweiterung im Inneren einer Bohrung und Schwenkwerkzeug zum Einsetzen in das Bohrwerkzeug.**

(57) Ein Bohrwerkzeug zum Herstellen einer Erweiterung im Inneren einer Bohrung weist in einer Längsnut (16) seines Bohrerschaftes (12) ein zweiarmiges Schwenkwerkzeug (17) auf, dessen hinterer Arm (31) in der unwirksamen Stellung des Schwenkwerkzeuges (17) aus der Längsnut (16) herausragt und beim Einführen des Bohrwerkzeuges in die Bohrung (34) vom Bohrungsrand (35) in die Nut (16) hineingedrückt wird. Der dadurch aus der Nut (16) herausgehobene vordere Arm (32) des Schwenkwerkzeuges (17) stellt dann beim Drehen des Bohrwerkzeuges die Bohrungserweiterung (36) her. Das Schwenkwerkzeug (17) kann lose in der Längsnut (16) liegen, wo es durch in Ringnuten (23, 24) des Bohrerschaftes (12) eingelegte Ringe (20), z.B. O-Ringe, gehalten werden kann.

Seine dem Grund der Längsnut zugekehrte Längskante (28) ist konvex gebogen oder geknickt, so daß der Berührungspunkt (29) dieser Kante (28) mit dem Nutengrund die Schwenkachse für das Schwenkwerkzeug (17) bildet.

EP 0 111 117 A1

0111117

Phys. H. Bartels
Dipl.-Ing. H. Fink
Dr.-Ing. M. Held

ZUGELASSENE VERTRETER BEIM
EUROPÄISCHEN PATENTAMT

Lange Str. 51, D-7000 Stuttgart 1
Tel. (0711) 296310 u. 297295
Telex 0722312 (patwo d)

6.Oktober 1983
Reg.-Nr.126 691
7508rlh

Firma GEBRÜDER HELLER DINKLAGE GMBH WERKZEUGFABRIK,
Steinfelder Str. 11, 2843 Dinklage

---

Bohrwerkzeug zum Herstellen einer Erweiterung im Inneren
einer Bohrung und Schwenkwerkzeug zum Einsetzen in das
Bohrwerkzeug.

---

Die Erfindung betrifft ein Bohrwerkzeug zum Herstellen einer Erweiterung im Inneren einer Bohrung, insbesondere in Gestein, mit einem Bohrerschaft, der eine Längsnut aufweist, die sich über eine Strecke längs des Schaftes erstreckt und in der ein zweiarmiges Schwenkwerkzeug angeordnet ist, das durch Einwirkung des Bohrungsrandes auf seinen hinteren Betätigungsarm aus einer unwirksamen Stellung in wirksame Stellungen schwenkbar ist, in denen der vordere Schneidarm des Schwenkwerkzeuges so weit aus der Nut herausragt, daß er zum Herstellen der Erweiterung an der Bohrungswand angreift.

Postscheckamt Stuttgart 7211-700 BLZ 60010070
Deutsche Bank AG, 1428630    BLZ 60070070

Telefonische Auskünfte und Aufträge sind
nur nach schriftlicher Bestätigung verbindlich

Die Fachwelt bemüht sich schon seit langem, ein brauchbares Bohrwerkzeug zu schaffen, mittels dessen in einer Bohrung eine Erweiterung, also eine sogenannte hinterschnittene Bohrung, hergestellt werden kann.

Nach der US-PS 833 240 aus dem Jahr 1906 wird zur Lösung dieser Aufgabe ein Werkzeug vorgeschlagen, das an seinem vorderen Ende zur Bildung von radial ausspreizbaren Schneidenträgern ausgebildet ist, die durch einen in das Werkzeug axial hineinschiebbaren, vorne vorstehenden Keil auseinander spreizbar sind, wenn dieser Keil am Boden der Bohrung anstößt. Die Werkzeuge dieser Art haben sich jedoch nicht bewährt, weil die ausspreizbaren Schneidkörperträger beim Bohren leicht vom Werkzeug abgerissen werden.

Ein Bohrwerkzeug der eingangs genannten Art ist durch die DE-OS 23 31 467 bekannt. Bei diesem bekannten Werkzeug ist das zweiarmige Schwenkwerkzeug in der Nut des Werkzeuges um einen Zapfen schwenkbar befestigt, der das Schwenkwerkzeug i die beiden Arme unterteilt. Im hinteren Betätigungsarm des Schwenkwerkzeuges ist ein Schrägschlitz vorgesehen, der mit der Längsachse des Bohrwerkzeuges einen spitzen Winkel bildet und in den ein Führungsstift eingreift, der an einer au: dem Schaft des Bohrwerkzeuges verschiebbaren Vorschubhülse befestigt ist und in        sich axial erstreckenden Längsschlitz des Bohrwerkzeuges geführt ist. Die Vorschubhülse ist für die Anlage am Bohrungsrand mit einer Andrückscheibe versehen. Durch eine den Schaft des Bohrwerkzeuges umfassen Schraubenfeder wird die Vorschubhülse nach vorne gedrückt, daß der Führungsstift am vorderen Ende des Schrägschlitzes anliegt und dadurch das Schwenkwerkzeug in seiner unwirksamen Stellung hält. Das Bohrwerkzeug ist an sein vorderen Ende als Bohrkopf zum Vollbohren einer Bohrung aus gebildet. Wird mit diesem Bohrwerkzeug eine Bohrung gebohrt dann ist das Schwenkwerkzeug, so lange es in seiner unwirksamen Stellung verbleibt, unwirksam. Erst wenn die Andrückscheibe am Bohrungsrand anstößt und dadurch die Vorschubhül mit dem Führungsstift axial längs des Schaftes des Bohrwerkzeuges gegen die Kraft der Rückstellfeder zum hinteren Ende des Bohrwerkzeuges hin verschoben wird, verschiebt sich der Führungsstift im Schrägschlitz des Betätigungsarmes und schwenkt dadurch das Schwenkwerkzeug so, daß der vordere Schneidarm des Schwenkwerkzeuges aus der Nut des Bohrwerkzeuges heraustritt und dadurch zur Herstellung der Erweiterung an der Bohrungswand angreift.

Die Verbindung der mit dem Bohrungsrand zusammenwirkenden Andrückscheibe mit dem Betätigungsarm des Schwenkwerkzeuges besteht beim bekannten Bohrwerkzeug aus mehreren Teilen und ist daher verhältnismäßig kompliziert. Dadurch ist die Herstellung dieses Bohrwerkzeuges erschwert und das Auswechseln des bei der Benutzung verschleißenden Schwenkwerkzeuges umständlich, was die Wirtschaftlichkeit eines solchen Bohrwerkzeuges stark beeinträchtigt. Außerdem wird durch die Längsschlitze im Werkzeugschaft für den Durchtritt des Führungsstiftes der Werkzeugschaft, zusätzlich zu der Schwächung durch die Nut für das Schwenkwerkzeug, geschwächt.

Der Erfindung liegt die Aufgabe zu Grunde, ein Bohrwerkzeug zum Herstellen einer Erweiterung im Inneren einer Bohrung zu schaffen, bei dem zum Betätigen des Schwenkwerkzeuges möglichst wenig Teile benötigt werden, um dadurch die Bauweise des Werkzeuges und das Auswechseln der Verschleißteile zu vereinfachen, und hierbei eine Lösung zu finden, bei der für die Zusammenwirkung des Bohrungsrandes mit dem Betätigungsarm des Schwenkwerkzeuges der Schaft des Bohrwerkzeuges nicht durch zusätzliche Schlitze geschwächt wird.
Diese Aufgabe ist bei einem Bohrwerkzeug der eingangs genannten Art gemäß der Erfindung dadurch gelöst, daß das Schwenkwerkzeug so geformt ist, daß der Betätigungsarm in den unwirksamen Stellungen des Schwenkwerkzeuges für die Einwirkung des Bohrungsrandes aus der Nut herausragt. Dadurch wird in überraschend einfacher Weise erreicht, daß, sobald das Bohrwerkzeug in die Bohrung bis zu einer Tiefe eingeführt ist, in der die Erweiterung hergestellt werden soll, der

- 4 -

Betätigungsarm durch den Bohrungsrand in die Nut hinein- und dadurch der Schneidarm aus der Nut herausgedrückt werden, so daß keine weiteren Teile für die Einwirkung des Bohrungsrandes auf den Betätigungsarm des Schwenkwerkzeuges erforderlich sind. Außer der Nut für das Schwenkwerkzeug werden auch keine weiteren den Schaft des Bohrwerkzeuges schwächenden Schlitze benötigt, um das Schwenkwerkzeug in seine wirksamen Stellungen zu schwenken.

Das Schwenkwerkzeug kann zum Herstellen einer Erweiterung in einer bereits fertigen Bohrung lose in die Längsnut eingelegt sein. Die Schwenkbarkeit kann dann dadurch ermöglicht werden, daß die dem Nutengrund zugekehrte innere Längskante des Schwenkwerkzeuges mit dem Nutengrund ein Schwenklager bildet. Man kann dann das noch ruhende Bohrwerkzeug in die Bohrung einführen, wo der Schneidarm des Schwenkwerkzeuges von der Bohrungswand in der Längsnut gehalten wird. Sobald das Bohrwerkzeug so tief in die Bohrung eingeführt ist, daß der Bohrungsrand den Betätigungsarm berührt, wird die Bohrmaschine eingeschaltet und das Bohrwerkzeug tiefer in die Bohrung eingeführt. Dadurch drückt der Bohrungsrand den Betätigungsarm in die Längsnut hinein, so daß der Schneidarm zum Herstellen der Erweiterung an die Bohrungswand gedrückt wird.

Bei einer vorteilhaften Ausführungsform der Erfindung können ein Mittel, das das Schwenkwerkzeug schwenkbar in der Längsnut des Bohrerschaftes hält, und ein Mittel zum Erzeugen einer Rückstellkraft vorhanden sein, die den Schneidarm in seiner unwirksamen Stellung hält. Durch diese Ausbildung kann das Bohrwerkzeug zum Herstellen einer Erweiterung in eine fertige Bohrung oder zum gleichzeitigen Bohren der Bohrung und zum Herstellen der Erweiterung verwendet werden.

Der Schwenkarm kann dabei in bekannter Weise um einen Schwenkzapfen schwenkbar in der Nut gelagert sein und durch eine, z.B. am Boden der Nut befestigte und auf den Betätigungsarm des Schwenkwerkzeuges einwirkende Druckfeder als Rückstellkraft in der unwirksamen Stellung gehalten werden. Zur Erzeugung der Rückstellkraft kann im Bereich des Schneidarmes im Bohrerschaft eine Ringnut für einen elastisch nachgiebigen Ring, z.B. einen O-Ring oder eine Ringfeder, vorhanden sein, der durch Übergreifen der Längsnut zur Erzeugung der Rückstellkraft für das Schwenkwerkzeug mit der Außenkante des Schneidwerkzeuges zusammenwirkt und den Schwenkarm immer in seine unwirksame Stellung drückt, so lange nicht der Bohrungsrand auf den Betätigungsarm einwirkt.

Bei Bohrwerkzeugen, die in Schlagbohrmaschinen eingesetzt werden, werden beim Bohren auf das Bohrwerkzeug Schläge ausgeübt. Sobald der Schneidarm des Schwenkwerkzeuges aus der Nut des Bohrerschaftes heraustritt, werden auch auf das Schwenkwerkzeug diese Schläge durch die Bohrungswand ausgeübt, wodurch der Lagerzapfen des Schwenkwerkzeuges durch Stöße belastet wird. Dadurch ist die Standzeit eines solchen Werkzeuges stark beschränkt. Auch wird durch die Bohrungen für den Lagerzapfen im Bohrerschaft dieser geschwächt.

Bei einer besonders vorteilhaften Ausführungsform der Erfindung kann jedoch das oben erwähnte lose in die Längsnut eingelegte Schwenkwerkzeug durch den die Rückstellkraft bildenden, elastisch nachgiebigen Ring in der Längsnut gehalten werden, so daß dann auch mittels des lose in die Längsnut eingelegten Schwenkwerkzeuges gleichzeitig eine Bohrung und eine Erweiterung in dieser Bohrung hergestellt werden können. Hierbei ergibt sich noch der besondere Vorteil, daß das hier wesentliche Verschleißteil, nämlich das Schwenkwerkzeug, ohne Hilfswerkzeuge einfach von Hand ausgewechselt werden kann.

- 6 -

Diese Ausführungsform mit dem lose in die Längsnut eingelegten Schwenkwerkzeug kann besonders vorteilhaft so ausgebildet werden, daß mindestens ein Teil des hinteren Endes des Schwenkwerkzeuges mindestens in allen wirksamen Stellungen desselben am hinteren Ende der Längsnut anliegt, so daß dann die beim Schlagbohren auf das Schwenkwerkzeug ausgeübten Schläge unmittelbar auf das Ende der Längsnut und damit auf den Schaft des Bohrwerkzeuges übertragen werden.

Bei einem erfindungsgemäßen Bohrwerkzeug, bei dem der Betätigungsarm unmittelbar mit dem Bohrungsrand zusammenwirkt, kann immer dann, wenn das Gestein, in dem die Bohrung hergestellt ist, brüchig ist, der Bohrungsrand durch den aus der Längsnut herausragenden Betätigungsarm beschädigt werden. Um dies zu vermeiden, ist bei einer vorteilhaften Weiterbildung der bevorzugten Ausführungsform der Erfindung ein auf dem Bohrerschaft axial verschiebbarer Anschlagring vorgesehen, der beim Einführen des Bohrerschaftes in die Bohrung durch Anlage am Bohrungsrand aus einer vorderen Ruhestellung in hintere Arbeitsstellungen verschiebbar ist, in denen er den Betätigungsarm des Schwenkwerkzeuges in die Längsnut hinein und dadurch das Schwenkwerkzeug in seine wirksamen Stellungen schwenkt. Bei diesem Ausführungsbeispiel entspricht der Anschlagring der Andrückscheibe des oben genannten bekannten Bohrwerkzeuges, nur daß bei dem gemäß der Erfindung ausgebildeten Ausführungsbeispiel weder ein Führungsstift noch Schlitze im Bohrerschaft und im Betätigungsarm für die Verbindung des Anschlagringes mit dem Betätigungsarm erforderlich sind, da dieser unmittelbar auf den aus der Längsnut herausragenden Betätigungsarm einwirkt, sobald er vom Bohrungsrand längs des Bohrerschaftes axial nach hinten verschoben wird. Durch den Wegfall des Führungsstiftes kann der Anschlagring drehbar auf dem Bohrerschaft

- 7 -

gelagert sein, so daß er beim Bohren der Erweiterung unbeweglich
auf dem Bohrungsrand ruhen kann.

Die Erfindung betrifft auch ein Schwenkwerkzeug zum Einsetzen in die Längsnut eines Bohrwerkzeuges gemäß der Erfindung. Das erfindungsgemäße Schwenkwerkzeug ist insbesondere
dadurch gekennzeichnet, daß es als langgestreckte Platte
ausgebildet ist, die an mindestens einem Ende neben ihrer
einen Längskante eine Schneide aufweist und deren sich über
ihre ganze Länge erstreckende Mittellinie mindestens an dem
der Schneide abgekehrten Ende von dieser einen Längskante aus
gesehen konkav gewölbt oder geknickt ist.

Die Erfindung ist in der folgenden Beschreibung an Hand
von Ausführungsbeispielen im einzelnen erläutert.

Es zeigen:

Fig. 1 und 2   Axialschnitte eines ersten Ausführungsbeispieles eines Bohrwerkzeuges gemäß der Erfindung,
wobei das Schwenkwerkzeug in
seiner unwirksamen bzw. in seiner wirksamen Stellung dargestellt ist;

Fig. 3 und 4   den Fig. 1 und 2 entsprechende
Darstellungen eines zweiten Ausführungsbeispieles;

Fig. 5 und 6   Schnitte nach den Linien
V - V bzw. VI - VI in Fig.3 in
vergrößerter Darstellung;

Fig. 7 bis 11   der Fig. 5 entsprechende Darstellungen von weiteren fünf
Ausführungsbeispielen.

- 8 -

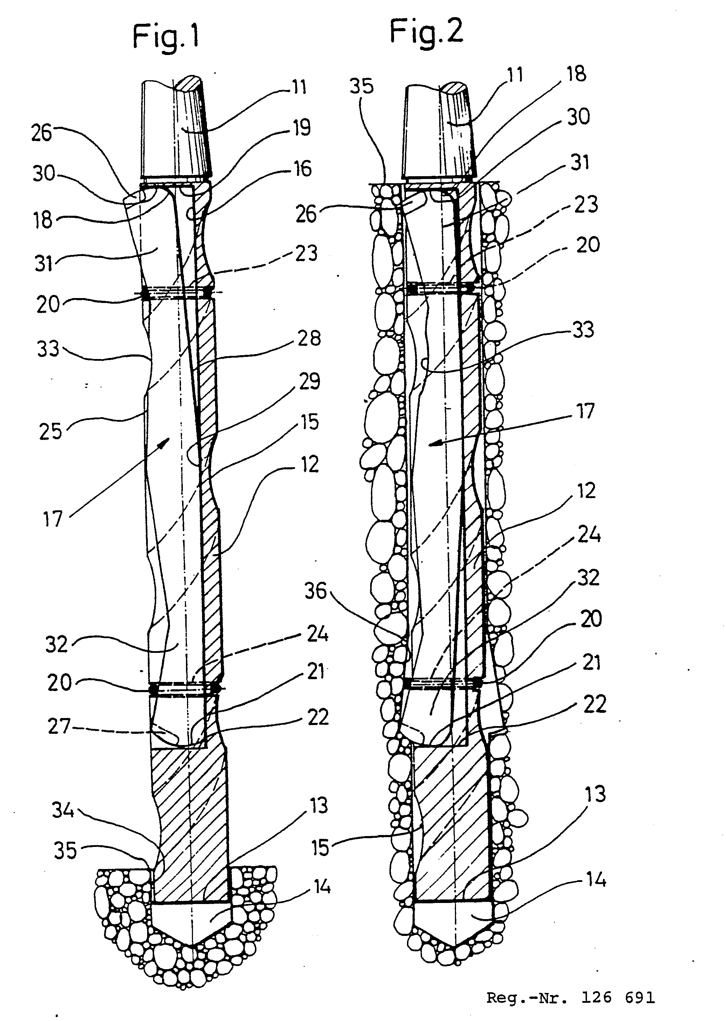

Das in den Fig. 1 und 2 dargestellte Bohrwerkzeug zum Herstellen einer Erweiterung im Inneren einer Bohrung weist einen Einspannschaft 11 und einen Bohrerschaft 12 auf, die ein Stück bilden. Am vorderen Ende des Bohrerschaftes ist in einer Nut 13 eine Schneidplatte 14 zum Vollbohren angeordnet. Weiterhin weist der Bohrerschaft 12 an seinem Umfang eine schraubenförmige Abführnut 15 für das beim Bohren erzeugte Bohrmehl auf.

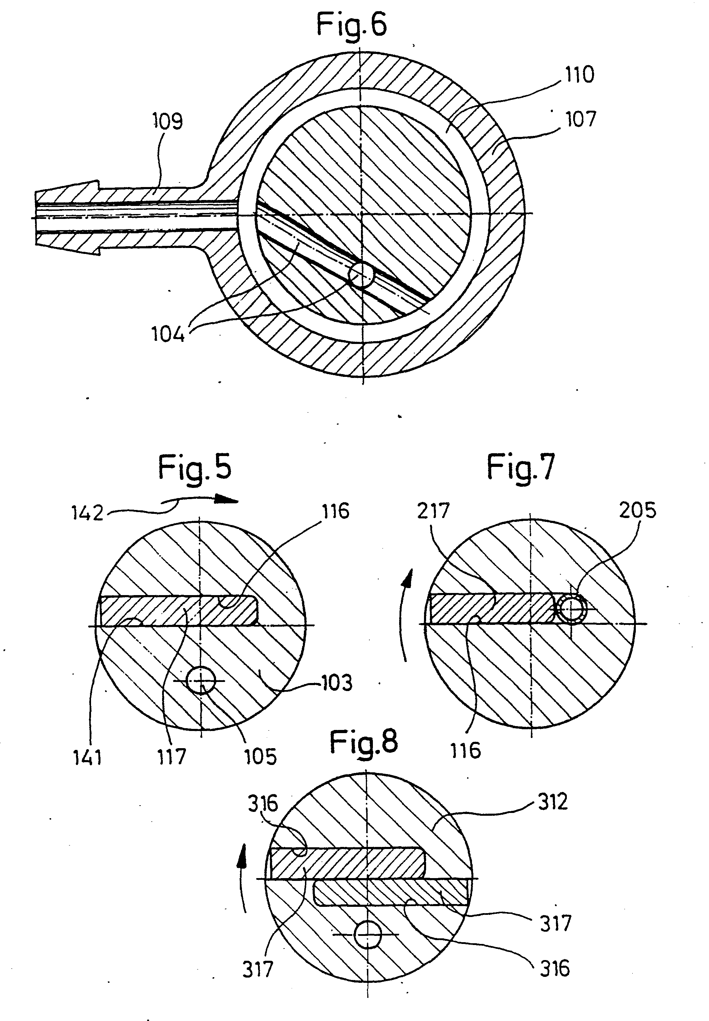

Im Bohrerschaft ist eine sich über einen beträchtlichen Teil seiner Länge erstreckende Längsnut 16 für ein als Ganzes mit 17 bezeichnetes Schwenkwerkzeug vorgesehen, dessen Länge etwa der Länge der Längsnut 16 entspricht, so daß sein hinteres Ende 18 am hinteren Ende 19 der Nut 16 und sein vorderes Ende 21 am vorderen Ende 22 der Längsnut 16 mit Spiel anliegen. Damit das Schwenkwerkzeug 17 nicht aus der Längsnut 16 herausfällt, sind im Bereich des hinteren und des vorderen Endes des Schwenkwerkzeuges in dem Bohrerschaft 12 Ringnuten 23 bzw. 24 vorgesehen, in denen je ein O-Ring 20 angeordnet ist, die das Schwenkwerkzeug in der Längsnut halten. Die Längsnut 16 ist, wie das in Verbindung mit der Beschreibung des zweiten Ausführungsbeispiels in Fig. 5 dargestellt ist, so angeordnet, daß diejenige (in den Fig. 1 und 2 dem Betrachter zugekehrt Seitenwand der Längsnut, deren Außenrand beim Bohren der Längsnut 16 nacheilt, in einer Diametralebene des Bohrerschaftes 12 liegt.

Das Schwenkwerzeug 17 ist eine langgestreckte Platte, die in Bezug auf ihre mittlere, zu den Plattenbreitseiten parallele, also in den Fig. 1 und 2 etwa waagerecht und parallel zur Zeichenebene liegende, Querachse drehsymmetrisch ausgebildet ist und an ihren beiden Enden 18 und 21 neben

ihrer der Öffnung der Längsnut 16 zugekehrten Längskante 25 mit Schneidplatten 26 bzw. 27 versehen, die so angeordnet sind, daß die Schneide der Schneidplatte 27 am vorderen Ende 21 des Schwenkwerkzeuges 17 sich an der voreilenden Breitseite des Schwenkwerkzeuges 17 befindet. Bei der Darstellung nach den Fig. 1 und 2 ist also die Schneidplatte 27 auf der dem Betrachter abgekehrten und die Schneidplatte 26 auf der dem Betrachter zugekehrten Breitseite des Schwenkwerkzeuges 17 angeordnet, so daß, wenn das Schwenkwerkzeug um seine in den Fig.1 und 2 etwa waagerecht verlaufende mittlere Querachse um 180° geschwenkt wird, das Schneidwerkzeug 26 in die gleiche Lage kommt wie das Schneidwerkzeug 27. Die Längsmittellinie des Schwenkwerkzeuges ist von seiner die Schneide aufweisenden Längskante 25 aus gesehen an beiden Enden konkav geknickt.

Die dem Grund der Längsnut 16 zugekehrte zweite Längskante 28 des Schwenkwerkzeuges ist um eine mittlere Knickstelle 29 konvex geknickt, so daß diese Knickstelle zusammen mit dem geraden Grund der Nut 16 ein Schwenklager für das Schwenkwerkzeug 17 bildet und dieses in einen Betätigungsarm 31 und einen Schneidarm 32 unterteilt. Um das durch die Knickstelle 29 mit dem geraden Grund der Nut 16 gebildete Schwenklager kann das Schwenkwerkzeug aus der in Fig. 1 dargestellten unwirksamen Stellung, in der der Betätigungsarm 31 aus der Längsnut 16 herausragt, in die in Fig. 2 dargestellte wirksame Stellung geschwenkt werden, in der der Schneidarm 32 aus der Längsnut 16 herausragt. Die Ringnuten 23 und 24 sind hierbei so angeordnet, daß in der in Fig. 1 dargestellten unwirksamen Stellung die O-Ringe 20 ohne Druck an der äußeren Längskante 25 des Schwenkwerkzeuges anliegen, so daß beim Einschwenken in die wirksame Stellung der vordere O-Ring 20 gespannt wird und dadurch eine Rückstellkraft zum Rückstellen des Schwenkwerkzeuges 17 in seine unwirksame Stellung erzeugt.

Beide Enden 18 und 21 des Bohrwerkzeuges sind konvex abgerundet und die Schneidplatten 26 und 27 sind so angeordnet, daß die jeweils am hinteren Ende befindliche Schneidplatte (in der in den Fig. 1 und 2 dargestellten Lage des Schwenkwerkzeuges 17 die Schneidplatte 26) sich in allen Schwenkstellungen des Schwenkwerkzeuges 17 in einem Abstand von
dem Punkt 30 der hinteren Endkante befindet, mit dem das
Schwenkwerkzeug 17 an dem hinteren Ende 19 der Längsnut 16
anliegt.

Damit die Abführung des Bohrmehls durch die Abführnut 15
durch das Schwenkmesser in seinen beiden Stellungen nicht
beeinträchtigt wird, ist dieses an seiner äußeren Längskante 25 mit Einschnitten 33 versehen, durch die verhindert
wird, daß das Schwenkwerkzeug in seinen beiden Stellungen
in die Abführnut hineinragt.

Beim Bohren mit dem in den Fig. 1 und 2 dargestellten Bohrwerkzeug wird zunächst mit der Schneidplatte 14 eine zylindrische Bohrung 34 gebohrt. Hierbei befindet sich das
Schwenkwerkzeug in der in Fig. 1 dargestellten unwirksamen
Stellung, bei der der Betätigungsarm 31 aus der Längsnut 16
herausragt. Sobald das Bohrwerkzeug jedoch so weit in das
zu bohrende Gestein eingedrungen ist, daß das hintere aus
der Längsnut 16 herausragende Ende der Längskante 25 des
Betätigungsarmes 31 am Bohrungsrand 35 anstößt, wird mit
weiterem Eindringen des Bohrwerkzeuges in das Gestein das
Schwenkwerkzeug 17 aus der in Fig. 1 dargestellten unwirksamen Stellung in wirksame Stellungen geschwenkt, bei denen
das vordere Ende des Schneidarmes 32 des Schwenkwerkzeuges
17 mit der Schneidplatte 27 aus der Längsnut 16 herausragt
und dadurch in der zylindrischen Bohrung 34 eine sich mit
zunehmendem Eindringen des Bohrwerkzeuges in das Gestein
vergrößernde Erweiterung 36 hergestellt wird.

Dadurch, daß das hintere Ende des Schwenkwerkzeuges 17
mit einem Punkt 30 am hinteren Ende 19 der Längsnut 16 an-

- 11 -

liegt, der sich in einem Abstand von der Schneidplatte 26 befindet, wird verhindert, daß, wenn das Bohrwerkzeug in einer Schlagbohrmaschine benutzt wird, durch die von der Bohrungswand auf das Schwenkwerkzeug 17 wirkenden Stöße die Schneidplatte 26 beschädigt oder von dem Schwenkwerkzeug gelöst wird.

Beim Herausziehen des Bohrwerkzeuges aus der Bohrung 13 wird das Schwenkwerkzeug, sobald der Betätigungsarm 31 aus der Bohrung 34 heraustritt, durch die Kraft des O-Ringes 20 wieder in seine unwirksame Stellung zurückgeschwenkt. Das Schwenkwerkzeug 17 kann nach Abnutzung einfach aus der Längsnut 16 herausgekippt werden, wenn vorher die O-Ringe 20 entfernt wurden, was ohne Hilfswerkzeuge jederzeit möglich ist.

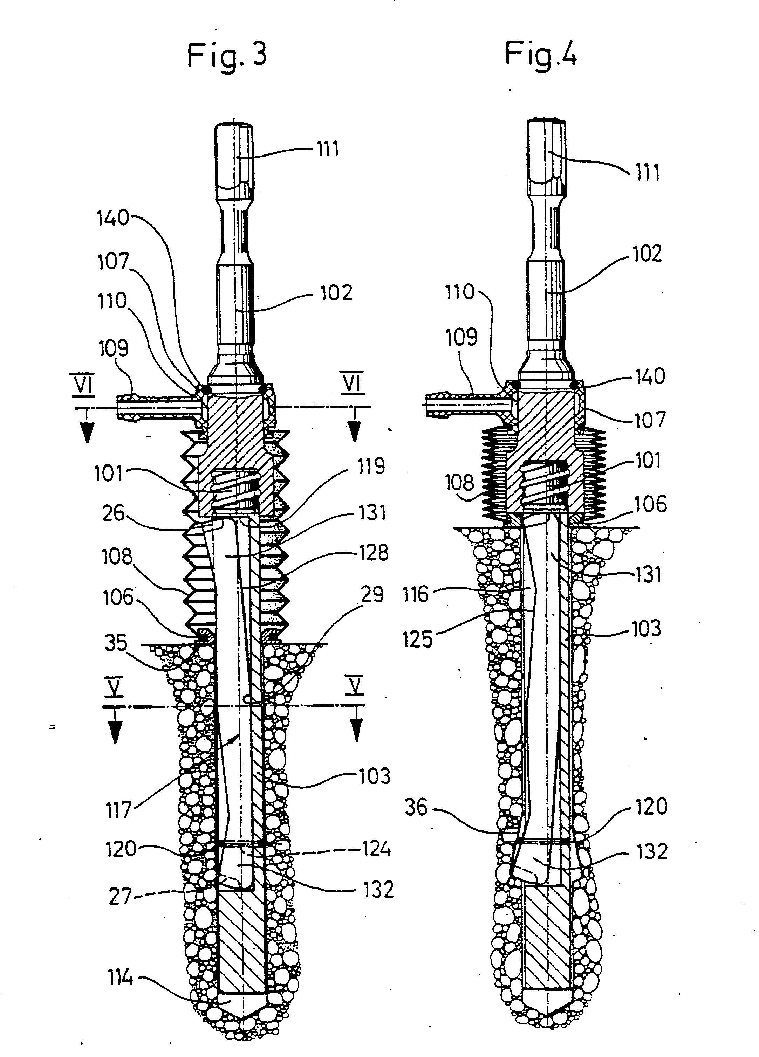

In der Darstellung des zweiten Ausführungsbeispieles in den Fig. 3 bis 6 sind diejenigen Teile, die dem Ausführungsbeispiel nach den Fig. 1 und 2 entsprechen, mit um 100 vergrößerten Bezugszahlen bezeichnet, so daß durch die Verwendung dieser Bezugszahlen auf die Beschreibung des Ausführungsbeispieles nach den Fig. 1 und 2 Bezug genommen wird.

Das zweite Ausführungsbeispiel unterscheidet sich vom ersten Ausführungsbeispiel zunächst dadurch, daß es aus zwei zusammensteckbaren, beim dargestellten Ausführungsbeispiel durch eine Schraubverbindung 101 zusammengeschraubten Teilen, nämlich einem den Einspannschaft 111 aufweisenden Einspannteil 102 und dem Bohrerschaft 103, besteht. Zum Absaugen des Bohrmehls sind im Bohrerschaft 103 und im Einspannteil 102 im zusammengeschraubten Zustand miteinander kommunizierende Absaugkanäle 104 bzw. 105 vorgesehen, so daß der Bohrerschaft 103 keine der Abführnut 15 des ersten Ausführungsbeispiels entsprechende Nut an seiner äußeren Oberfläche benötigt. Das Schwenkwerkzeug 117 entspricht im wesentlichen dem Schwenkwerkzeug 17 des ersten Ausführungsbeispiels, nur daß hier infolge des Fehlens einer Abführnut

- 12 -

auch die Einschnitte 33 an der äußeren Längskante 125 nicht erforderlich sind.

Ein wesentlicher Unterschied des zweiten Ausführungsbeispiels gegenüber dem ersten besteht darin, daß hier für die Zusammenwirkung mit dem Bohrungsrand 35 der Bohrung 34 ein Anschlagring 106 vorgesehen ist, der lose auf dem Bohrerschaft 103 sitzt, so daß er axial auf dem Bohrerschaft 103 verschoben werden kann und dieser selbst sich relativ zum Anschlagring 106 drehen kann. Dieser Anschlagring 106 ist mit einer Anschlußhülse 107 mittels eines Faltenbalges 108 verbunden, der den Anschlagring 106 federnd nachgiebig in einem Abstand von der Anschlußhülse 107 hält, so daß sich der Anschlagring 106 in einem solchen Abstand von dem hinteren Ende der Längsnut 116 befindet, daß er den aus der Längsnut 116 herausragenden Teil des Betätigungsarmes 131 nicht berührt. Die Anschlußhülse 107 ist drehbar, aber axial unverschiebbar, auf dem Einspannteil 102 gelagert und mit einem Anschlußstutzen 109 für eine in der Zeichnung nicht dargestellte Saugleitung versehen. Außerdem weist die Anschlußhülse eine innere Ringnut 110 auf, die durch Dichtringe 140 nach außen abgedichtet ist und mit dem Absaugkanal 104 kommuniziert.

Die Schneidplatte 114 am vorderen Ende des Bohrerschaftes 103 ist in bekannter Weise auswechselbar mit dem Bohrerschaft 103 verbunden und so angeordnet, daß ihre Breitseiten parallel zu den Breitseiten des Schwenkwerkzeuges 117 verlaufen.

Da der Anschlagring ein Herausfallen des Schwenkwerkzeuges 117 verhindert, ersetzt er den oberen O-Ring 20 des ersten Ausführungsbeispiels. Damit das Schwenkwerkzeug mit seinem unteren Ende nicht aus der Längsnut 116 herausfallen kann, ist jedoch nach wie vor für dieses untere Ende der O-Ring 120 vorgesehen, der in einer Ringnut 124 des Bohrerschaftes 103 liegt und die Rückstellkraft erzeugt, um das Schwenkwerkzeug 117 federelastisch in der in Fig. 3 dargestellten unwirksamen Stellung zu halten.

- 13 -

Beim Bohren mit dem Bohrwerkzeug nach den Fig. 3 bis 6 wird an den Anschlußstutzen 109 ein Saugschlauch angeschlossen, der verhindert, daß die Anschlußhülse von der Drehbewegung des Einspannteiles 102 mitgenommen wird. Das hat zur Folge, daß auch der Anschlagring 106 diese Drehung nicht mitmacht. Sobald die mit dem Bohrwerkzeug gebohrte Bohrung 34 eine Tiefe erreicht hat, bei der der Anschlagring 106 den Bohrungsrand 35 berührt, wird beim Weiterbohren der Anschlagring 106 axial längs dem Werkzeugteil 103 nach hinten verschoben, bis er den aus der Längsnut 116 herausragenden Teil des Betätigungsarmes 131 berührt und diesen in die Längsnut hinein und damit den Schneidarm 132 zur Herstellung der Bohrungserweiterung 36 aus der Längsnut 116 herausdrückt. Hierbei ruht der Anschlagring 106 fest auf dem Bohrungsrand, so daß dieser von der Einwirkung des Betätigungsarmes geschützt wird. Beim Herausziehen des Bohrwerkzeuges aus der Bohrung 34 wird der Anschlagring 106 durch die Federkraft des Faltenbalges 108 nach vorne gedrückt, bis er die in Fig.3 dargestellte Stellung erreicht hat, in der er den Betätigungsarm des Schwenkwerkzeuges 117 freigibt, so daß das Schwenkwerkzeug durch die Kraft des O-Ringes 120 in seine unwirksame Stellung zurückgeschwenkt wird.

Wie das aus Fig. 5 ersichtlich ist, liegt diejenige Seitenwand 141 der Längsnut 116, deren Außenrand beim Umlaufen des Bohrwerkzeuges in Richtung des Pfeiles 142, also beim Bohren der Längsnut 116, nacheilt, in einer Diametralebene des Bohrerschaftes und der Absaugkanal 105 ist in der durch die Längsnut 116 nicht geschwächten Hälfte des Bohrerschaftes 103 angeordnet, wodurch die Schwächung des Bohrerschaftes 103 durch die Längsnut 116 und den Absaugkanal 105 auf einem Minimum gehalten werden kann und eine bestmögliche Abstützung des Schwenkwerkzeuges 117 beim Bohren der Erweiterung 36 erreicht wird. Um Risse an Ecken der Längsnut zu vermeiden, ist deren Grund, wie das aus Fig.5 ersichtlich ist, abgerundet und geht stetig in die Seitenwände der Nut über.

Bei beiden beschriebenen Ausführungsbeispielen ist das Schwenkwerkzeug um seine Querachse drehsymmetrisch ausgebildet, so daß nach Abnutzung der Schneidplatte 27 das Schwenkwerkzeug geschwenkt werden kann, so daß dann die Schneidplatte 26 vorne liegt und beim Herstellen der Erweiterung wirksam wird. Anstelle der bei beiden Ausführungsbeispielen vorgesehenen Knickstelle 29 des Schwenkwerkzeuges 17 bzw. 117 kann die innere Längskante 28 bzw. 128 des Schwenkwerkzeuges gewölbt ausgebildet sein. Anstelle einer konvex verlaufenden Innenkante 28 bzw. 128 kann auch eine gerade Hinterkante vorgesehen sein, wenn der Grund der Nut entsprechend so ausgebildet ist, daß die gerade Hinterkante mit dem Grund der Nut eine Schwenkachse bildet, um die das Schwenkwerkzeug aus der unwirksamen in die wirksame Stellung geschwenkt werden kann. In jedem Fall verläuft jedoch die Längs-Mittellinie des Schwenkwerkzeuges so, daß sie von der äußeren Längskante 125 aus gesehen konkav geknickt oder gebogen ist.

Um zu verhindern, daß beim Einwirken des Anschlagringes 106 auf den Betätigungsarm 131 das Bohrwerkzeug zu schnell axial vorgeschoben wird, was insbesondere dann der Fall sein kann, wenn das Bohrwerkzeug nur zum Aufbohren einer Erweiterung 36 in einer schon bestehenden Bohrung 34 verwendet wird oder bei einer abgewandelten Ausführungsform nur zu diesem Zweck vorgesehen und ausgebildet ist, kann für den Anschlagring 106 ein seine Bewegung aus seiner vorderen Ruhestellung in seine hintere Arbeitsstellung bremsendes, in der Zeichnung nicht dargestelltes Dämpfungselement, z.B. mindestens ein Dämpfungszylinder, vorgesehen sein, das z.B. zwischen der Anschlußhülse 107 und dem Anschlagring 106 angeordnet sein kann.

In den Fig. 7 bis 11 sind weitere Abwandlungen der beschriebenen Ausführungsbeispiele dargestellt.

Beim Ausführungsbeispiel nach Fig. 7 ist der Absaugkanal als in die Nut 116 eingesetztes Rohr 205 ausgebildet, an der

- 15 -

sich dann das Schwenkwerkzeug 217 in der beschriebenen Weise abstützt und das Schwenklager bildet.

Bei dem in Fig. 8 dargestellten Ausführungsbeispiel sind auf zwei einander etwa diametral gegenüberliegenden Seiten des Bohrerschaftes 312 zwei miteinander kommunizierende Längsnuten 316 für zwei Schwenkwerkzeuge 317 vorgesehen.

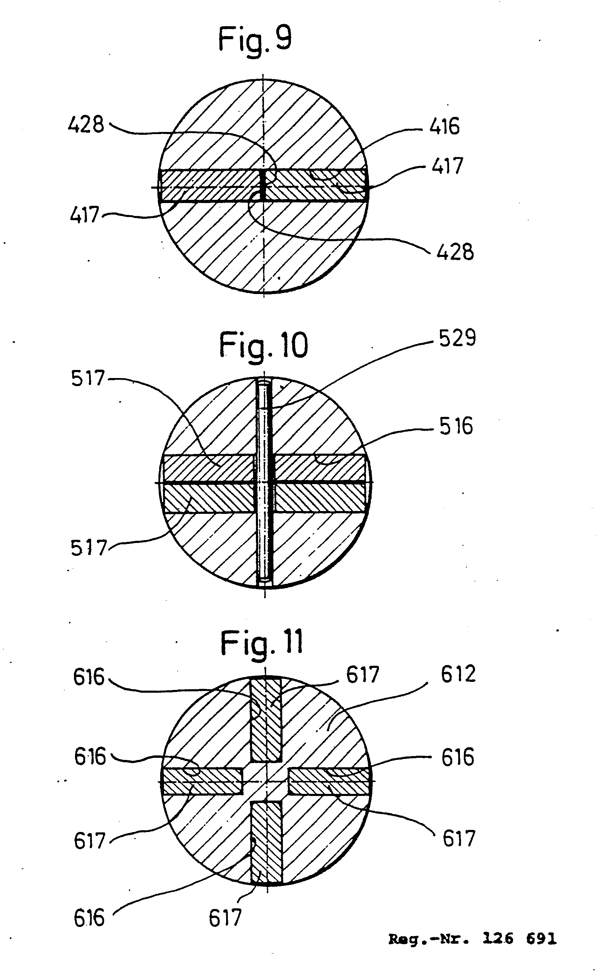

Beim Ausführungsbeispiel nach Fig. 9 ist eine diametral durchgehende und zentrisch angeordnete Längsnut 416 vorgesehen, in der zwei mit ihren inneren Längskanten 428 das Schwenklager bildenden Schwenkwerkzeug 417 angeordnet sind.

Beim Ausführungsbeispiel nach Fig. 10 ist auch eine durchgehende Längsnut 516 vorgesehen, in der nebeneinander zwei Schwenkwerkzeuge 517 so angeordnet sind, daß sie in einer Diametralebene des Bohrerschaftes 512 nebeneinander liegen. In diesem Fall ist die Schwenkachse durch einen Querbolzen 529 gebildet.

Bei der Ausführungsform nach Fig. 11 sind im Bohrerschaft 612 vier miteinander rechte Winkel bildende Längsnuten 616 für vier Schwenkwerkzeuge 617 vorgesehen.

- 16 / Ansprüche

- 16 -

P a t e n t a n s p r ü c h e

1. Bohrwerkzeug zum Herstellen einer Erweiterung (36) im Inneren einer Bohrung (34), insbesondere in Gestein, mit einem Bohrerschaft (12), der eine Längsnut (16) aufweist, die sich über eine Strecke längs des Schaftes erstreckt und in der mindestens ein zweiarmiges Schwenkwerkzeug (17) angeordnet ist, das durch Einwirkung des Bohrungsrandes (35) auf seinen hinteren Betätigungsarm (31) aus einer unwirksamen Stellung in wirksame Stellungen schwenkbar ist, in denen der vordere Schneidarm (32) des Schwenkwerkzeuges so weit aus der Nut herausragt, daß er zum Herstellen der Erweiterung an der Bohrungswand angreift, dadurch gekennzeichnet, daß das Schwenkwerkzeug (17) so geformt ist, daß der Betätigungsarm (31) in den unwirksamen Stellungen des Schwenkwerkzeuges für die Einwirkung des Bohrungsrandes (35) aus der Nut (16) herausragt.

2. Bohrwerkzeug nach Anspruch 1, dadurch gekennzeichnet, daß das Schwenkwerkzeug lose in der Längsnut liegt und daß die dem Nutengrund zugekehrte innere Längskante (28) des Schwenkwerkzeuges (17) mit dem Nutengrund ein Schwenklager bildet.

3. Werkzeug nach Anspruch 1 oder 2, bei dem ein Mittel vorgesehen ist, das das Schwenkwerkzeug (17) schwenkbar in der Längsnut (16) des Bohrerschaftes (12) hält und daß ein Mittel zum Erzeugen einer Rückstellkraft vorhanden ist, die den Schneidarm (32) in seiner unwirksamen Stellung hält.

4. Bohrwerkzeug nach Anspruch 2, dadurch gekennzeichnet, daß im Bereich des Schneidarmes (32) im Bohrerschaft (12) eine Ringnut (24) für einen elastisch nachgiebigen Ring (20) vorhanden ist, der durch Übergreifen der Längsnut (16) zur Erzeugung einer Rückstellkraft für das Schwenkwerkzeug (17) mit der äußeren Längskante (25) des Schneidarmes (32) zusammenwirkt und das Schwenkwerkzeug in der Längsnut hält.

5. Bohrwerkzeug nach einem der Ansprüche 1 bis 4, dadurch gekennzeichnet, daß mindestens ein Teil des hinteren Endes (18) des Schwenkwerkzeuges (17) mindestens in allen wirksamen Stellungen desselben am hinteren Ende (19) der Längsnut anliegt.

6. Bohrwerkzeug nach einem der Ansprüche 1 bis 5, dadurch gekennzeichnet, daß die Längsnut (16, 116) so angeordnet ist, daß ihre Mittelebene parallel und in einem Abstand von einer Diametralebene des Bohrerschaftes verläuft und an der Öffnung der Längsnut in der Drehrichtung des Bohrerschaftes (12) dieser voreilt.

7. Bohrwerkzeug nach einem der Ansprüche 1 bis 6, gekennzeichnet durch einen auf dem Bohrerschaft (103) axial verschiebbaren Anschlagring (106), der beim Einführen des Bohrerschaftes in die Bohrung (34) durch Anlage am Bohrungsrand (35) aus einer vorderen Ruhestellung in hintere Arbeitsstellungen verschiebbar ist, in denen er den Betätigungsarm (131) des Schwenkwerkzeuges (117) in die Längsnut (116) hinein und dadurch den Schneidarm in seine wirksamen Stellungen schwenkt.

- 18 -

8. Bohrwerkzeug nach Anspruch 7, dadurch gekennzeichnet, daß ein den Anschlagring (106) in seiner Ruhestellung elastisch nachgiebig haltendes Rückführelement (108) vorhanden ist.

9. Bohrwerkzeug nach einem der Ansprüche 1 bis 8, dadurch gekennzeichnet, daß der Bohrerschaft (12) an seinem vorderen Ende mindestens eine Schneidplatte (14) zum Voll- oder Aufbohren aufweist.

10. Bohrwerkzeug nach einem der Ansprüche 1 bis 9, dadurch gekennzeichnet, daß der Bohrerschaft (103) mit einem Kanal (104, 105) zum Absaugen des Bohrkleins versehen ist.

11. Bohrwerkzeug nach Anspruch 10, dadurch gekennzeichnet, daß als Absaugkanal ein Rohr (205) vorgesehen ist, das am Grunde des Längsschlitzes (116) angeordnet ist.

12. Bohrwerkzeug nach einem der Ansprüche 1 bis 11, dadurch gekennzeichnet, daß es aus zwei zusammensteckbaren Teilen besteht, von denen der hintere als Einspannteil (102) mit einem Einspannschaft (111) und der vordere als Bohrerschaft (103) mit der Längsnut (116) für das Schwenkwerkzeug (117) versehen sind.

13. Werkzeug zum Einsetzen in eine Längsnut eines Bohrwerkzeuges zum Herstellen einer Erweiterung im Inneren einer Bohrung in Form einer langgestreckten Platte, die an einem Ende neben ihrer einen Längskante (25) eine Schneide zum Aufbohren der Erweiterung aufweist, dadurch gekennzeichnet, daß die langgestreckte Platte über ihre ganze Fläche durchgehend geschlossen und so geformt ist, daß ihre sich über ihre Länge erstreckende Mittellinie mindestens an dem der Schneide abgekehrten Ende von der die Schneide tragenden Längskante (25) aus gesehen konvex gebogen oder geknickt ist.

14. Werkzeug nach Anspruch 13, dadurch gekennzeichnet, daß die hintere Längskante (28) der langgestreckten Platte konvex gebogen oder geknickt ist.

15. Werkzeug nach Anspruch 13 oder 14, dadurch gekennzeichnet, daß es in Bezug auf seine mittlere, zu den Plattenbreitseiten parallele Querachse drehsymmetrisch ausgebildet und an jedem Ende mit Schneiden versehen ist.

16.Werkzeug nach einem der Ansprüche 13 bis 15, dadurch gekennzeic daß die der Schneide benachbarte kurze Endfläche der langgestreckten Platte konvex gewölbt ist und daß zur Bildung der Schneide eine mit der langgestreckten Platte verbundene Schneidplatte (26, 27) vorgesehen ist, die so angeordnet ist, daß sie sich in einem Abstand von dem Punkt dieser Endfläche befindet, der am weitesten von der anderen kurzen Endfläche entfernt ist.

Fig.1    Fig.2

1/4

0111117

Reg.-Nr. 126 691

0111117

# Fig. 3

# Fig.4

Reg.-Nr. 126 691

3/4  0111117

Fig.6

Fig.5  Fig.7

Fig.8

Reg.-Nr. 126 691

**Fig. 9**

**Fig. 10**

**Fig. 11**

Reg.-Nr. 126 691

**Europäisches Patentamt**

# EUROPÄISCHER RECHERCHENBERICHT

Nummer der Anmeldung

EP 83 11 0515

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-2 495 583 (HERON) * Spalte 2, Zeile 41 - Spalte 5, Zeile 25; Figuren 1-3,5 * | 1,3,7 | B 23 B 51/00 B 28 D 1/14 |
| D,Y | DE-A-2 331 467 (STUMPP & KURZ) * Seite 22, Zeile 18 - Seite 25, Zeile 12; Figuren 6-10 * | 1,3,9 | |
| Y | Patent Abstracts of Japan Band 4, Nr. 57, 26. April 1980 page 119M9 & JP-A-55-24804 | 1,3,9 | |
| A | DE-A-2 324 106 (SCHÖLER) * Ganzes Dokument * | 1 | |
| A | US-A-2 214 484 (SEAL) * Anspruch 1; Figuren 1-4 * | 1,3 | RECHERCHIERTE SACHGEBIETE (Int. Cl. ³) |
| A | DE-A-2 731 901 (LIEBIG) * Seite 11, Zeilen 17-21; Figur 1 * | 8 | B 23 B 29/034 B 23 B 41/06 B 23 B 51/00 B 27 G 15/02 B 28 D 1/14 E 21 B 10/32 |
| A | DE-B-2 700 700 (HASHIMOTO) * Figuren 2-4 * | 1 | |

Der vorliegende Recherchenbericht wurde für alle Patentansprüche erstellt.

| Recherchenort BERLIN | Abschlußdatum der Recherche 25-01-1984 | Prüfer MARTIN A E W |
|---|---|---|